# EUROPEAN PATENT APPLICATION

(11) **EP 2 615 791 A1**
(43) Date of publication of application: **17.07.2013**
(21) Application number: 12382012.8
(22) Date of filing: 13.01.2012
(51) Int. Cl.: H04L 29/06

(54) **Method, system and devices for delivering media content in IP networks**

(71) Applicant: Alcatel Lucent, 75007 Paris (FR)
(72) Inventor: Camacho Espada, Jesus Angel, 28050 Madrid (ES)
(74) Representative: Carpintero Lopez, Francisco

(57) **Abstract**

A router and method for content delivery to customers by means of a group transfer protocol based on HTTP which builts a tree from the source or root router to the edge routers which the customers are attached to. Thus, only one flow for the same requested content is needed, instead of one flow per customer. When a content request is received (10) from a customer and locally cached (12), it is delivered rightly by the router (14). If the requested content is cached remotely (120), the request is redirected (121) to ask the remote router to deliver the content. Otherwise (130), the request is forwarded (16) along the tree to the neighbors (101). If multiple routers reply (102), the request is redirected to a selected router according to OAM measurements (103). If no answer is received (105), the request is processed with no caching (106). Statistics on caching can be updated accordingly (15, 19, 104, 107, 122).

## Description

### BACKGROUND OF THE INVENTION

### Technical field

The present invention relates to the delivery of multimedia contents (e.g., text, audio, video, software, etc., and any combination of them), which are provided by Internet Content Providers, and more specifically to deliver media content by using HTTP (Hypertext Transfer Protocol).

### Description of related art

Traditionally, customers have access to Internet and ask all sorts of media content such as video, music, software, text files,... when getting access to web pages, social networks, video streaming, file downloads, online games, etc. These contents are provided by Internet Content Providers (ICPs) to customers (i.e., end users) through the Internet; therefore, a copy of the requested content for each requested end user is carried on the network. This situation leads the network Operators to increase the bandwidth of their links in order to cope with the increasing traffic requested by customers.

A solution deployed today is the implementation of CDNs (Content Delivery Networks) into the networks of Operators. The CDNs are deployed by the network Operators and are not compatible or open to other Operators. A content delivery network or content distribution network (CDN) is a group of servers that have replicated the same information as the original and serve user requests facilitating the transfer of large files quickly in consultation. When properly designed and implemented, a CDN can improve access to the data it caches by increasing access bandwidth and redundancy and reducing access latency.

Caching content means that data are stored transparently in a cache (i.e., a block of memory for temporary storage of data likely to be used again) so that future requests for that content can be served faster. Data or media content types often cached in CDNs include web objects (text, graphics, URLs and scripts), downloadable objects (media files, software, documents), applications, live streaming media, and database queries.

Nowadays, Internet can handle data traffic only in unicast mode, i.e., one copy (of the data content) per user which requests the content, as before explained. Multicast (i.e., the delivery of information to a group of destinations) can be used only in Private Networks of the Operators or implemented in IP (Internet Protocol) multicast for applications such as media streaming and internet television but requiring the use of CDNs.

### SUMMARY

In light of the present need for delivering media content in Internet in an optimous way which allows multicasting, a brief summary of various exemplary embodiments is presented. Some simplifications and omissions may be made in the following summary, which is intended to highlight and introduce some aspects of the various exemplary embodiments, but not to limit its scope. Detailed descriptions of preferred exemplary embodiments adequate to allow those of ordinary skill in the art to make and use the invention concepts will follow in later sections.

According to an aspect of the invention a method is provided for media content delivery, which comprises the following steps:
a) receiving a HTTP request for a content from an end user of a network operator,
b) checking whether the content is cached in a HTTP address assigned to the content in a local user database of a first router directly connected to the end user,
c) if no HTTP address is assigned to the content in the local user database of the first router, sending a request message for the content to at least one candidate router of a caching database, which contains at least one router belonging to the network operator and candidate for caching the content, and
   c.1) if there is an answer message in reply to the request message, selecting one candidate router which is sender of the answer message and redirecting to the selected candidate router a request for delivering the content to the end user.

The order of the method steps is not a critic issue, so other method steps orders are also possible.

In an embodiment of the invention, the step of selecting one candidate router can be performed in accordance to OAM measurements (e.g., latency, CPU load, link occupation, etc. of the routers which are capable of content caching).

In another embodiment, the method uses a threshold, configurable by the network operator, which can be compared with the number of HTTP requests of a particular content and thus determines based on this comparison when said particular content is to be cached by a candidate router.

In another possible embodiment, the method further comprising a step of updating statistics on content caching performed by indicating, when the content is delivered, at least whether there is a candidate router which has the content cached and, optionally, indicating whether the caching is being carried out locally or remotely.

In a alternative embodiment of the invention, the step of sending a request message for the content to at least one candidate router comprises sending the request message to at least one transit router, neighbour of a router that is sending the request message, and this step is repeated until said request message reaches at least one candidate router of the caching database.

According to another aspect of the invention a router is provided for implementing the method described before, said router comprising:
- receiving means of a HTTP request for a content from an end user of a network operator,
- checking means to look up a local user database of a first router directly connected to the end user in order to search for a HTTP address assigned to the content and at which the content is cached,
- sending means of request messages for the content to at least one candidate router of a caching database, which contains at least one router belonging to the network operator and candidate for caching the content,
- selecting means of one candidate router which is sender of an answer message in reply to the request message and to which a request for delivering the content to the end user is redirected.

The router can be a candidate router itself if it comprises caching means to cache media content and belongs to the caching database.

Another aspect of the invention relates to a system for media content delivery which is a telecommunications network of any known network topology (e.g. ring, mesh, etc.) comprising at least a router as the one above defined. According to another aspect of the invention, a computer program product is provided, comprising computer-executable instructions for performing any of the steps of the method previously disclosed, when the program is run on a computer and a digital data storage medium is also provided encoding a machine-executable program of instructions to perform any of the steps of the method previously disclosed.

These and other aspects of the invention will be apparent from and elucidated with reference to the embodiments described hereinafter.

The presented embodiments potentially have the following advantages when compared with the prior art:
- HTTP-based: Compatible with the use of standardized and world famous protocol, Hypertext Transfer Protocol, but adding the benefits of enabling content distribution efficiently just as Multicast is used for private networks of the Operators and even making possible the distribution of content, in a one-to-many traffic diffusion mode, among different CDNs of the Operators.
- Distributed content delivery networks by allowing all the (HTTP) routers distpaching HTTP requets, to which the customers are attached asking for contents, to build a distributed CDN. This benefits a lot of IP applications: using the distributed CDN only for http-requested pages that are very popular, for http requests based on video streaming, TV streaming... The so-called distributed CDN acts as traditional multicast networks but this allows Internet multicast operation in real time and the use of content buffering only for a short time (in order to adapt to the delay variances of the network distribution), unlike the existing CDNs.

### BRIEF DESCRIPTION OF THE DRAWINGS

Some embodiments of the method, system and device in accordance with embodiments of the present invention are now described, by way of example only, and with reference to the accompanying drawings, in which:
Figure 1 shows a flow chart of the method according to an embodiment of the present invention.
Figure 2 shows a block diagram of a system according to an embodiment of the present invention.
Figures 3, 4 and 5 show schematic diagrams of different exemplary systems where embodiments of the present invention are going to be implemented.

Throughout the figures like reference numerals refer to like elements.

### DESCRIPTION OF EMBODIMENTS

The present inventions may be embodied in other specific devices, system and/or methods. The described embodiments are to be considered in all respects as only illustrative and not restrictive. In particular, the scope of the invention is indicated by the appended claims rather than by the description and figures herein. All changes that come within the meaning and range of equivalency of the claims are to be embraced within their scope.

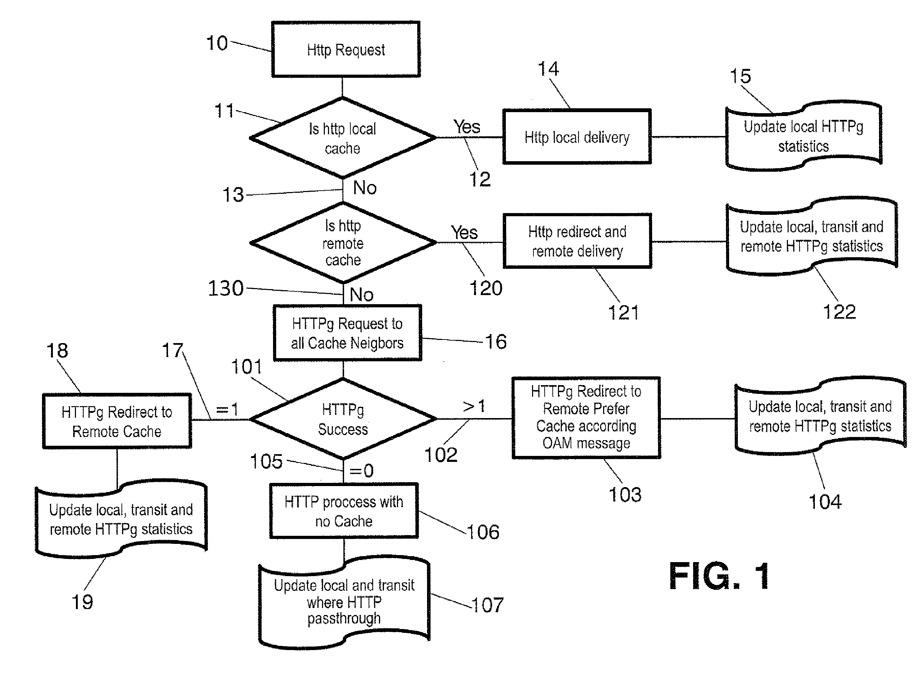

Figure 1 shows the main steps for delivering and caching of media content in accordance to an embodiment of the present invention. When a request for an specific content is received (10) from a customer -end user-, firstly a checking (11) is performed in the HTTP tables and databases of the routers, of the network Operator to which the customer is subscribed, in order to determine whether the requested content is locally cached (12) in a router of the network Operator or not (13) and if so, the content is delivered by this local router (14) through a routing tree content distribution as explained further below and statistics on local content caching are updated accordingly (15). In case that the requested content is cached remotely (120), the user's request is redirected (121) to the remote router which carries out the caching in order to ask said router to deliver the content and statistics on remote caching are updated accordingly (122). Otherwise (130), the user's request is forwarded (16) along the routing tree to the neighbor routers which may have said content cached, i.e., which may reply succesfully (101) to the request forwarding. If there is a single one remote router that is caching the content (17), an indication to deliver the content is redirected to the remote router (18) and statistics on content caching, taking into account both local and remote caches, are updated accordingly (19) in every router of the tree passed through. If a plurality of routers replies with success (102) indicating that they have the content cached, an indication to deliver the content is redirected to one selected remote router chosen according to Operation and Manteinance measurements (103) on latency, thoughput, cache capacity, etc., of the routers which sent a successful reply. Statistics on content caching, taking into account both local and remote caches, are updated (104). In the case that no answer is received from any router (105) indicating that the content is cached, the request is processed as known in prior art, with no caching (100), and the statistics on content caching are updated as usual (107).

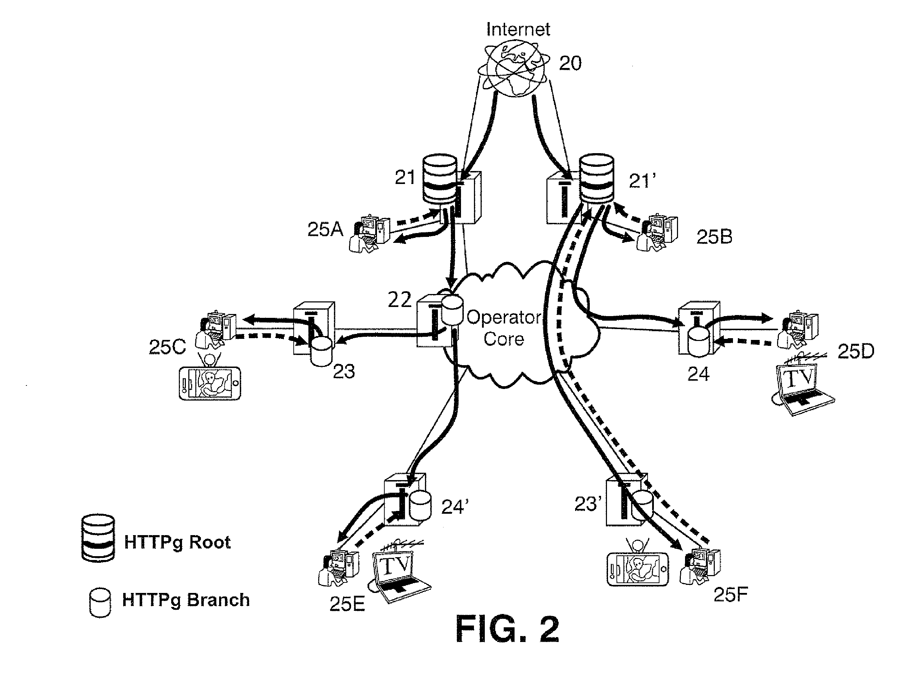

Figure 2 shows a possible embodiment of the invention wherein a multicast routing architecture builds trees for the distribution of content in a network scenario example. This tree-based routing architecture comprises two kinds of routers:
Root router (21, 21') which is the first point of the network of an Operator which makes the first content caching. This network element is provided with high storage capacity in order to cache all heavy contents or the contents which are most likely to be cached. In the example, the Root routers (21, 21') operate in the Internet Backbone (20).
Branch router (22, 23, 23', 24, 24') which is a point in the chain -or tree- of network elements for content delivery built from the point of entry into the Operator's network and the closest router to the end user (25A, 25B, 25C, 25D, 25E, 25F) requesting the content. In some cases, there is just one single branch and root router being the closest one to the end user (25A, 25B). In other possible cases, the branch router can be either a core router, either a border router, either a Provider edge router (22) or Customer edge router (23, 23', 24, 24').
Branch routers (22, 23, 23', 24, 24') are communicated among them and with one single Root router (21, 21') forming a routing tree for the multicast distribution of content. This communication involves the flow of the following messages through the tree -here called HTTPg: HTTP group- defined below:
   - *HTTPg Discover.* Control message for discovering all the, Branch and/or Root, Routers which belongs to the tree, i.e., which implement the multicast content delivery and caching in accordance to an enbodiment of the invention.
   - *HTTPg Hello:* Control message exchanged between routers which are neighbor in the tree.
   - *HTTPg OAM*: Control message to measure latency, CPU load, link occupation, etc. related to the network elements that implement cache. Tipically, this control message is launched periodically (e.g., to get measurements regularly every 5 or 10 minutes).
   - *HTTPg Request*: When a request for a specific content is received from an end user (25A, 25B, 25C, 25D, 25E, 25F), the closest router, i.e., the first network element of the Operator which is either Root or Branch router and to which the end user (25A, 25B, 25C, 25D, 25E, 25F) is connected, releases upstream a *HTTPg Request* message to check whether there is already a tree built and assigned with this content.
   - *HTTPg Success:* The first upstream network element, a Branch router, which has already assigned at least one tree for this content sends a *HTTPg Success* message as reply to the network element of the Operator that requested that content.
   - *HTTPg Redirect:* The network element -router- of the Operator which is closest to the end user (25A, 25B, 25C, 25D, 25E, 25F) sends a *HTTPg Redirect* message to the Branch router which replied with the previous *HTTPg Success* message.
   - *HTTPg CacheRequest*: Control message sent to a router in order to request content caching by said router. This cache request can be performed whenever the number of requests from end users for a specific content exceeds a determined threshold configurable by the Operator. Content cache can be performed either locally, i.e., *HTTPg CacheRequest* message is sent to the first network element of the Operator to which the end user (25A, 25B, 25C, 25D, 25E, 25F) is connected, either in a remote router connected to said network element. Each network element involved in the process can be kept informed on statistics of the contents that are locally cached as well as on the remote caching.
   - *HTTPg CacheSuccess*: Acknowledge message to inform that the content has been cached locally.
   - *HTTPg Update*: Notification message sent to all network elements in order to report that a specific content is being cached by a certain network element.
   - *HTTPg Release:* Notification message sent to all network elements in order to report that no longer a specific content is cached by a network element. This decision can be based on a threshold previously configured by the Operator for said content and after a timeout, also to be defined by the Operator and during which the content caching by the network element keeps below this threshold.

In an exemplary embodiment, the network Operator can distinguish three ranges of threshold values: "little", "medium" and "large". The possible values of each threshold range are defined between a minimum value and a maximum value determined according to the Operator requirements. For example, having the Operator classified groups of end users requesting content in accordance to the number of users, the Operator can define:
- *Little* threshold range means that content caching is performed whenever the first end user or a little group of users ask for the content.
- *Medium* threshold range means that content caching is performed when a considerably large group of users ask for the content.
- *Large* threshold range means that content caching is performed when a huge group of users ask for the content.

This threshold definition can be applied to some examples of applications as follows:
- *Video streaming:* Youtube or similar videos can be cached with a little threshold.
- *Software download:* source or executable code files can be cached by a little threshold.
- *Music:* Radio podcasts, Spotify, etc., contents can be cached with a medium threshold.
- *Online Games:* Most popular online games can be cached with little or medium threshold.
- *HTTP browsing:* web *pages* can be catched with a medium to large threshold.

The tree for content distribution takes into account the possible threshold values assigned to each IP application, i.e., to each specific content. Thus, if the number of requests for said specific application content keeps between the maximum and minimum values of the assigned threshold range, the contents between the Provider and end user are processed as usual: from origin to destination or to another network element of the distribution tree which is the closest to the source of the requested content.

The Provider can manipulate that threshold range to prompt content caching in a continuous way -"Always threshold"- or, on the contrary, just only for a few number of applications.
- *Always* threshold means that content caching is performed as soon as one end user asks for such content.

These applications can include:
- *TV streaming:* Internet TV Provider can delivery channels to Operator's Network which caches every TV channel in each closest point to the end users currently playing the TV. The threshold assigned by the Operator or Provider can be "Always", which means the TV channel is cached as soon as one customer asks for or plays the channel.
- *Live streaming:* Since this application requires a small cache for each TV channel as a "buffer" to cope with delay variations in the TV distribution network.
- *Operator Content Caching:* Threshold is also set to "Always", that is, any content can be catched always by Operator's definition.

Note that the router implements the method in a transparent manner with respect to the end users and their terminal equipments. That is, the terminal equipment used by a customer for requesting media content just sends a standardized HTTP request and the router is the network element which starts the method when the request is detected and determines whether the HTTP request has to be relayed and triggers a HTTPg request if required.

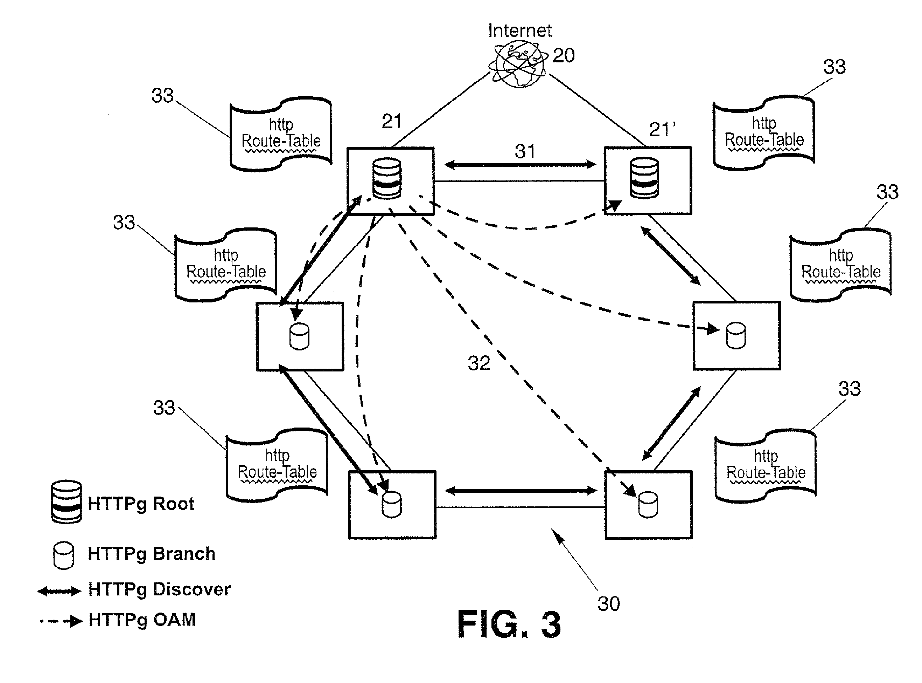

Figure 3 shows a possible scenario where the Operator's Network has a ring topology (30) and each network element implementing the content distribution for both local and remote customers. By means of the *HTTPg Discovery* messages (31) and *HTTPg OAM* messages (32) described before, the following databases, to which each involved network element or router can access, are generated:
- *Adjacency Database:* The adjacency or neighbor database is used to keep track of every network element directly connected to a given one, i.e., the neighborhood of a given network element in the network topology, which is HTTPg capable and so discovered by the *HTTPg Discovery* messages (31). The adjacency database is built and maintained through the exchange of periodic *HTTPg Hello* messages.
- *Caching Database:* The caching database is used to keep track of every network element, router, capable of performing content caching.
- *Local User Database:* Each network element build a database to keep track of end users locally attached to said network element. In this database, there can be users whose requested content is locally cached, i.e., the caching of the user's content is performed by said network element, as well as local users whose requested content is remotely cached, pointing to a remote network element where the cache proccess is performed.

These databases can be implemented as HTTP routing tables (33) which store the correspondence between the HTTP address and the router where a content from the given HTTP address is cached. When cache proccess is performed locally to the router, the routing table associates a tag "LOCAL cache" with the router.When cache proccess is performed remotely, the routing table gives the remote destination router where the content is cached. In addition to the aforementioned active database, there is a global database where every HTTP content that is being cached is associated with all the routers where the cache process of the content is beingcarried out.

Each HTTP routing table (33) is built taking into account the best router where the content is being cached. The election of which router is the best is based on the data from the HTTPg OAM messages and the HTTP addresses from the global database also to determine and consider which router is closer to the customer requesting the cached content.

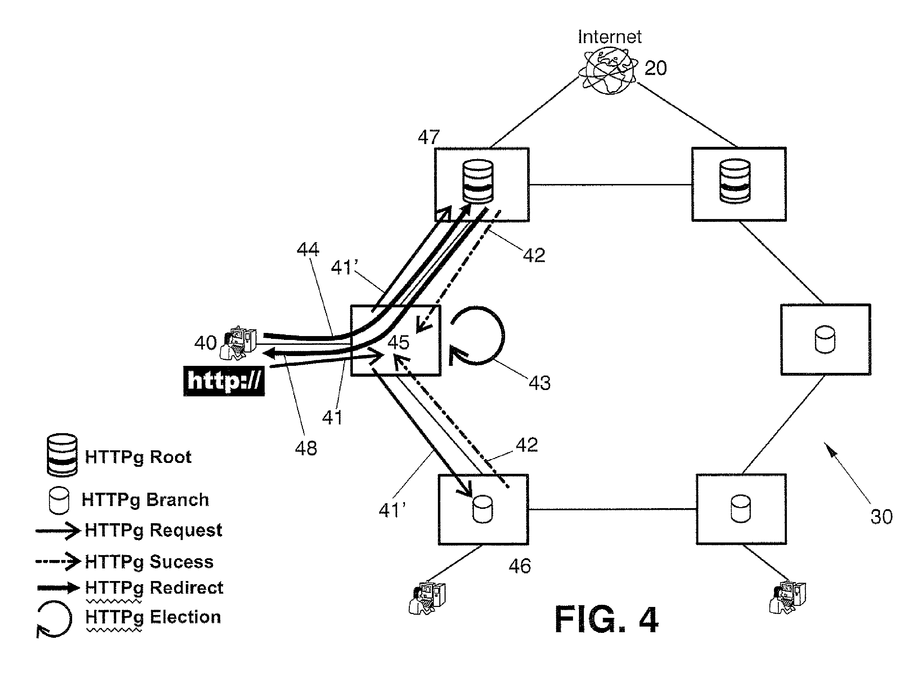

Figure 4 shows the message flow for content distribution through the tree built for a ring network as depicted in Figure 3, assuming an example case in which an end user (40) requests a specific content:
1. The user requests the content by sending a conventional - standardized- HTTP Request message (41) to the first network element which the end user (40) is connected to.
   a. If said first network element is not HTTPg capable, i.e., the network element does not understand "HTTPg" messages and so *HTTPg Discovery* messages has not discovered it, said network element processes the received message normally, until the request reaches a transit network element which is HTTPg capable or HTTPg compliant. The latter can start to process the corresponding HTTPg messages converting the conventional HTTP Request message (41) into a *HTTPg Request* message (41').
   b. If the requested content is found in the Local User Database of the network element processing the *HTTPg Request* as content being cached locally, this means that the content is cached in a router of the network Operator and then the network element sends "HTTPg Redirect "message to the local router caching the content and the content is locally delivering to the end user (40).
   c. If the content is found in the local user database of the network element but pointing to a remote destination router, then the network element sends "HTTPg Redirect" message to the remote network element and the content is distributed from said network element to the end user (40).
2. The first network element (45) reached as HTTPg compliant relays the *HTTPg Request* message (41') to its neighbors (46, 47) capable of implementing content caching, in accordance to its Caching Database. These messages progress through the network upto a network element that has that content cached and said network element reples with a *HTTPg Success* message (42). In the depicted example of Figure 4, the two neighbors (46, 47) have the content cached and both answer.
   a. If the first network element (45) does not have the cached content, as it is the example case, the first network element (45) makes forward the "Request HTTPg" to all its neighbors except to the network element from which the content request was received.
   b. Statistics on increasing traffic demands on such content is updated by all the involved network elements.
   c. Every network element that has the content, in this example: an adjacent branch router (46) and an adjacent root router (47), answers by *HTTPg Success* messages and performs no further relays of the request towards their respective neighbors.
3. The network elements which have the content cached and are the closest neighbors (46, 47) of the first network element (45) answer to the request with corresponding *HTTPg Success* messages (42).
4. Having received the HTTPg Success messages (42) from all the answering neighbors (46, 47), the network element (45) processes all messages and chooses (43) a network element from the candidates by checking which are more optimal to deliver the cached content according to the current information of Adjacency Database.
5. The first network element (45) sends a *HTTPg Redirect* message (44) to the chosen network element, e.g, the adjacent root router (47) in this case, which replies with the content delivering (48).

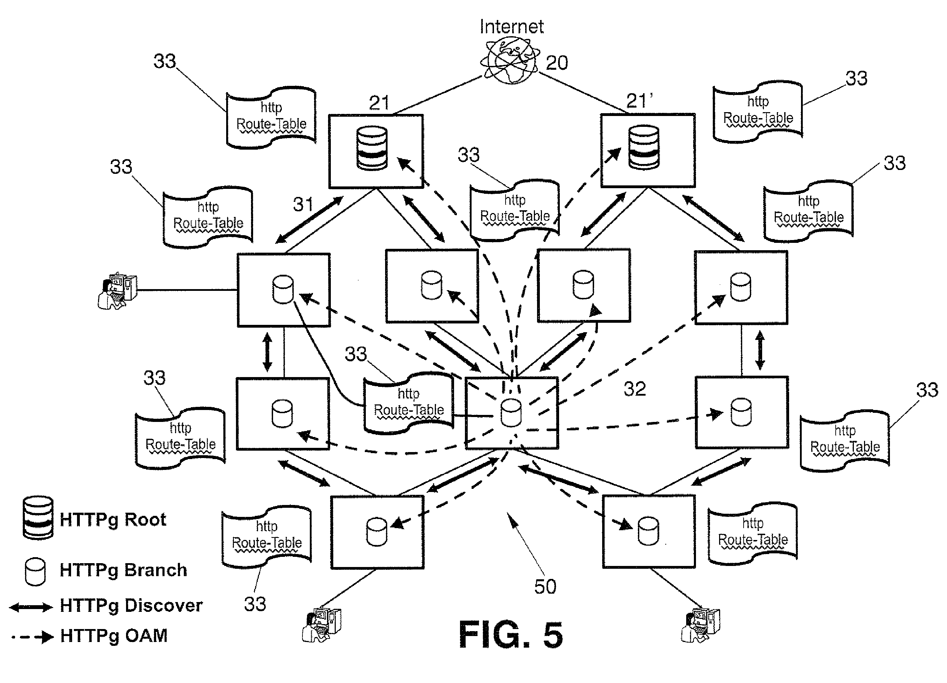

Figure 5 shows the message flow for content distribution through the tree built for a mesh network (50). Since the described distribution of content does not depend on the network topology, the message flow for generation of databases and content caching and delivery is hold in the same way as for the ring topology illustrated in Figures 3-4.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The description and drawings merely illustrate the principles of the invention. It will thus be appreciated that those skilled in the art will be able to devise various arrangements that, although not explicitly described or shown herein, embody the principles of the invention and are included within its scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof. The functions of the various elements shown in the figures, including any functional blocks labeled as "processors", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the FIGS. are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

## Claims

1. A method for delivering of media content in IP networks, said method comprising:
- receiving a HTTP request for a content from an end user of a network operator,
- checking whether the content is cached in a HTTP address assigned to the content in a local user database of a first router directly connected to the end user,
- if no HTTP address is assigned to the content in the local user database of the first router, sending a request message for the content to at least one candidate router of a caching database, which contains at least one router belonging to the network operator and candidate for caching the content, and
- if there is an answer message in reply to the request message, selecting one candidate router which is sender of the answer message and redirecting to the selected candidate router a request for delivering the content to the end user.

2. The method for delivering of media content according to claim 1, wherein the step of selecting one candidate router is performed in accordance to OAM measurements.

3. The method for delivering of media content according to any previous claim, wherein the step of sending a request message for the content to at least one candidate router comprising sending the request message to at least one transit router which is neighbour of a router sending the request message until said request message reaches at least one candidate router of the caching database.

4. The method for delivering of media content according to any previous claim, further comprising using a threshold configured by the network operator in order to be compared with number of HTTP requests of a content and determining when the content is to be cached by a candidate router based on the comparison with the threshold.

5. The method for delivering of media content according to any previous claim, further comprising, when the content is delivered, updating statistics on content caching indicating at least whether there is a candidate router which has the content cached.

6. The method for delivering of media content according to claim 5, wherein updating statistics further comprising indicating whether the content is cached either locally or remotely.

7. A router for media content deliver, said router comprising:
- receiving means of a HTTP request for a content from an end user of a network operator,
- checking means to look up a local user database of a first router directly connected to the end user in order to search for a HTTP address assigned to the content and at which the content is cached,
- sending means of request messages for the content to at least one candidate router of a caching database, which contains at least one router belonging to the network operator and candidate for caching the content,
- selecting means of one candidate router which is sender of an answer message in reply to the request message and to which a request for delivering the content to the end user is redirected.

8. The router for delivering of media content according to claim 7, wherein the selecting means perform redirection of the request for delivering the content to the candidate router in accordance to OAM measurements.

9. The router for delivering of media content according to any of claims 7-8, wherein the selecting means comprise checking means to determine when the content is to be cached by a candidate router based on the comparison of a threshold configured by the network operator with number of HTTP requests of a content.

10. The router for delivering of media content according to any of claims 7-9, wherein the sending means of request messages send the request message to at least one transit router which is neighbour of a router which is sender of the request message until said request message reaches at least one candidate router of the caching database.

11. The router for delivering of media content according to any of claims 7-10, further comprising statistics updating means which, when the content is delivered, indicate at least in content caching statistics whether there is a candidate router which has the content cached.

12. The router for delivering of media content according to any of claims 7-11, which further comprises caching means to cache media content and belongs to the caching database.

13. A telecommunications network comprising at least one router defined according to any of claims 7-12.

14. A computer program product comprising computer-executable instructions for performing the method according to any of the claims 1-6, when the program is run on a computer.

15. A digital data storage medium encoding a machine-executable program of instructions to perform a method according to any of the claims 1-6.
